# EUROPEAN PATENT APPLICATION

(11) **EP 2 777 995 A1**
(43) Date of publication of application: **17.09.2014**
(21) Application number: 14158206.4
(22) Date of filing: 06.03.2014
(51) Int. Cl.: B60R 25/04

(54) **Methods and systems related to automatic collection technology**

(30) Priority: 14.03.2013 US 201313827913
(71) Applicant: Gordon * Howard Associates, Inc., Littleton, CO 80120 (US)
(72) Inventor: Morgan, Gerald A., Littleton, CO 80123 (US); Macheca, Christopher, Centinnial, CO 80122 (US); Schwarz, Stanley G., Indialantic, FL 32903 (US)
(74) Representative: Robinson, David Edward Ashdown

(57) **Abstract**

Automatic Collection Technology. At least some of the example embodiments are methods including: receiving, at a computer systems of an operations center, information regarding a payment schedule for an asset loan; setting, by a computer system of the operations center, a first disablement date for the asset, the setting based on the payment schedule, and the disablement date set without human involvement; tracking the first disablement date by a computer system of the operations center, the operations center remotely located from the asset; recording information related to a payment made for the asset loan; and then setting, by a computer system of the operations center, a second disablement date in response to the payment, the second disablement date set without human involvement, and the second disablement date based on the information related to the payment made.

## Description

### BACKGROUND

A borrower seeking financing for the purchase of an asset may face a series of challenges both during the application process and after financing is approved. For example, in the process of being approved for financing, setting the terms of the loan may involve human decision making, and thus may be influenced by human prejudices. Additionally, once a loan has been approved, enforcement of the loan terms may be implemented by and through human planning and interaction. Thus, both the loan approval process, as well as enforcement of the terms of the loan, may be subject to human error, favoritism, or discriminatory practices.

### BRIEF DESCRIPTION OF THE DRAWINGS

For a detailed description of exemplary embodiments, reference will now be made to the accompanying drawings in which:
Figure 1 shows, in block diagram form, a system in accordance with at least some embodiments;
Figure 2 shows, in block diagram form, a flow chart in accordance with at least some embodiments;
Figure 3 shows, in block diagram form, a flow chart in accordance with at least some embodiments;
Figure 4 shows a computer system in accordance with at least some embodiments; and
Figure 5 shows, in block diagram form, a method in accordance with at least some embodiments.

### NOTATION AND NOMENCLATURE

Certain terms are used throughout the following description and claims to refer to particular system components. As one skilled in the art will appreciate, different companies may refer to a component and/or method by different names. This document does not intend to distinguish between components and/or methods that differ in name but not in function.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device that connection may be through a direct connection or through an indirect connection via other devices and connections.

"Remote" shall mean one kilometer or more.

"Without human involvement," with respect to actions taken by a computer system, shall mean that the action(s) taken by the computer system cannot be modified, at the time the action is taken, by a human interacting with a program executed on the computer system. The fact that the program may have been coded by a human does not obviate that actions taken by the computer system executing the program are "without human involvement." Moreover, a human entering a value (e.g., a payment amount received) into a computer system that may or may not result in the action(s), depending on the value entered, shall not obviate that the action(s) taken are without human involvement.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

Various embodiments are directed to systems and methods of automatically establishing and instituting payment schedules for an asset loan, thus eliminating predatory and/or discriminatory practices regarding loan term enforcement. In particular, various embodiments are directed to systems and related methods where payment schedules are established and instituted automatically and on a non-discriminatory basis on a remote computer system. The developmental context for the various example systems is where the asset loan is a vehicle loan, and thus specification will be based on the development context; however, the developmental context shall not be read as a limitation as to the applicability of the various embodiments. The specification turns first to a high level system overview.

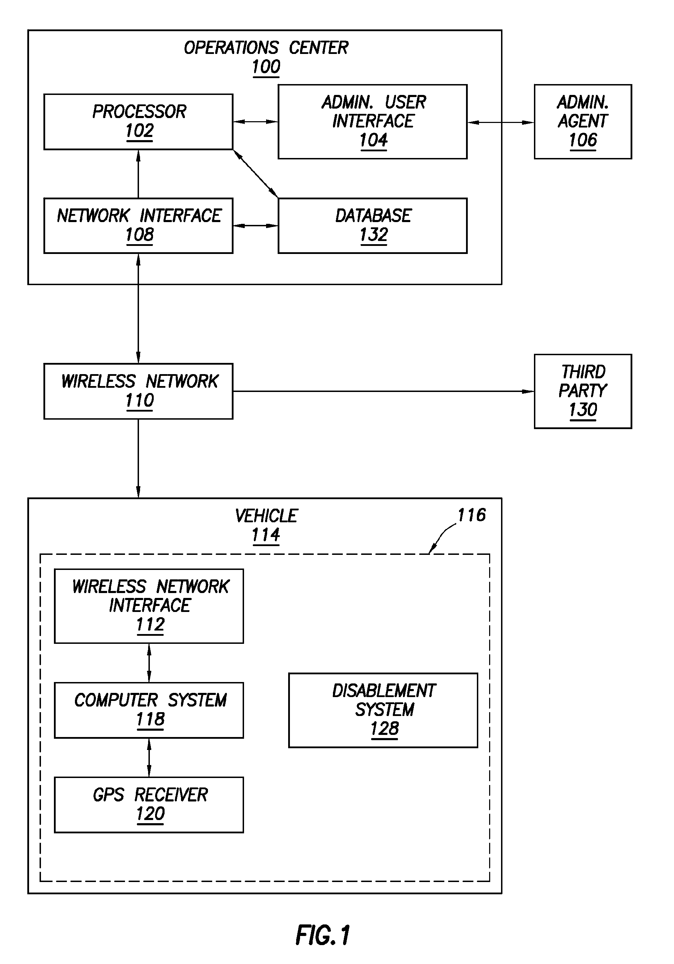

Figure 1 shows, in block diagram form, a system in accordance with at least some embodiments. In particular, the system comprises an operations center 100 communicatively coupled to a vehicle 114 by way of a wireless network 110. The operations center 100 comprises a processor 102. In some embodiments, the processor 102 may be a stand-alone computer system, or the processor may comprise a plurality of computer systems communicatively coupled and performing the functions of the operations center 100, the functions discussed more thoroughly below. The processor 102 may couple to an administrative user interface 104. The administrative user interface 104 may enable an administrative agent 106 to control or configure the operation of the system.

In one embodiment, in order to communicate with vehicle 114, the operations center 100 may further comprise a network interface 108 communicatively coupled to the processor 102. By way of the network interface 108, the processor 102, and any programs executing thereon, may communicate with vehicle 114, such as by wireless network 110. Wireless network 110 is illustrative of any suitable communications network, such as a cellular network, a Wireless Fidelity (Wi-Fi) network, or other mechanism for transmitting information between the operations center 100 and the vehicle 114.

In accordance with at least some embodiments, the operations center 100 is remotely located from the vehicle 114. In some cases, the operations center 100 and vehicle 114 may be located within the same city or state. In other cases, the operations center 100 may be many hundreds or thousands of miles from vehicle 114, and thus the illustrative wireless network 110 may span several different types of communication networks.

Still referring to Figure 1, the system further comprises a vehicle 114 communicatively coupled to operations center 100 by way of the illustrative wireless network 110. The vehicle 114 may comprise onboard device 116, where onboard device 116 may have location tracking capabilities, vehicle disablement capabilities, as well as the ability to receive information related to payments.

In particular, onboard device 116 may comprise a computer system 118. Although not specifically shown, computer system 118 may comprise a processor, where the processor may communicate with subsystems of the vehicle, such as a computer system of the vehicle (not specifically shown). The onboard device 116 configured to couple to the onboard diagnostics version 2 (OBD-II) port may also have the ability to read or determine data associated with the vehicle 114, and may also have the ability to command computer systems of the vehicle to disable certain functions (*e.g.* starting, spark ignition, fuel system) such that the vehicle 114 may be disabled at the command of the onboard device 116, discussed in more detail below.

Onboard device 116 may further comprise a wireless network interface 112 coupled to the computer system 118. By way of the wireless network interface 112, programs executed by the computer system 118 may communicate with other devices. In some embodiments, the wireless network interface 112 enables the computer system 118 to communicate with operations center 100 by way of a wireless transmission through the wireless network 110. The wireless network interface 112 thus implements a wireless communication system and/or protocol.

In one embodiment, onboard device 116 may comprise a disablement system 128 that can selectively disable the vehicle 114. Disablement may take many forms. For example, disabling the ability to crank the engine, disabling the spark ignition system, disabling the fuel pump relay, disabling by way of a starter interrupt, or a combination of disabling mechanisms. In other embodiments, the onboard device 116 may be a relay replacement device. For example, a starter relay is a device within a vehicle that, when activated, provides electrical current to the solenoid of the starter. In yet another case, the onboard device 116 may be a relay replacement device for any system that could disable the vehicle (*e.g.,* either prevents the motor from starting, or prevents the motor from continuing to operate).

Onboard device 116 may disable vehicle 114 on command from the operations center 100. In particular, the operations center may comprise disablement services described above, and at the request of any authorized entity (*e.g*., an administrative agent, a lending institution, a dealership), vehicle 114 may be disabled. In other cases, the onboard device 116 may disable the vehicle 114 in the absence of a command from the operations center 100. That is, in some cases the onboard device may be provided a future date, and in the absence of instructions otherwise from the operations center delivered over the wireless network 110, the onboard device 116 may disable the vehicle.

The onboard device 116 further comprises a global position system (GPS) receiver 120 coupled to computer system 118. The GPS receiver 120 receives signals from an array of GPS satellites orbiting the earth, and based on timing associated with arrival of those signals, a location of the onboard device 116 (and thus the vehicle 114) can be determined. In some cases, the GPS receiver 120 has sufficient functionality to calculate location, and thus the data passed to computer system 118 may be a direct indication of location. In other cases, the functionality to determine location may be shared between the GPS receiver 120 and software executing on the processor 102, by way of wireless network 110. That is, the GPS receiver 120 may receive the plurality of GPS signals and pass the information to a program on the processor 102, wherein the program may then make the determination as to a location of the onboard device 116, and thus the vehicle 114.

In one embodiment, the onboard device 116 tracks the vehicle with high precision, thus one may be able to identify the street and block at which the vehicle is passing at any given time (though the onboard device 116 may not necessarily have or contain street level databases). In other cases, the onboard device 116 may act only to determine the end-points of each trip. In another embodiment, location tracking may be accomplished by way of cellular signal triangulation (e.g., using the wireless network interface 112).

In some cases, the location determined by the onboard device 116 may only be a position on the face of the earth, for example, latitude and longitude. The operations center 100, receiving a stream of locations from the onboard device 116, may correlate to streets and addresses. In other cases, the onboard device 116 may have sufficient memory and computing functionality to not only determine position in a latitude and longitude sense, but also to correlate the positions to cities, streets, block numbers and addresses. Regardless of how the location tracking is accomplished, it may be utilized as a way to locate and, in some cases, aid in retrieving the vehicle for repossession in the event of a non-payment.

Consider the following example. A borrower seeks financing from a lending institution in order to purchase a vehicle. Financing is approved and the loan is established with the lending institution having criteria specific to the borrower (*e.g.,* length of loan, monthly payment amount, monthly payment due date). At this point, the lending institutions sends information regarding the loan to a remote computer system (such as a computer system located at operations center 100) which will establish a non-discriminatory, automatically instituted payment schedule for the loan. Although a human may enter the loan information into a program executing on the computer system, once the loan information is entered, a payment schedule is established and instituted automatically based on pre-determined criteria.

In one embodiment, payment enforcement policies established and instituted by the remote computer system are identical for every borrower. That is to say, regardless of the terms or particulars of each loan, every borrower will have the same enforcement policies established. For example, while the loan amount, principal and interest amounts, and due dates may vary between borrowers, each of the borrowers will have the same grace periods and enforcement actions Consider, for this example, that a borrower's payment is due on the first of the month. If a payment is not received by the first, the system is pre-programmed to initiate a warning of late payment and implement a grace period of five days, thus extending the due date in this example to the fifth of the month. If, again, payment is not received by the fifth in this example, the borrower's vehicle will be disabled. Thus, the grace period, and action taken in the absence of payment, is the same for every borrower, and thus implemented in a non-discriminatory manner.

In another embodiment, borrowers may be categorized based on a plurality of criteria. For example, borrowers having a credit score higher than 800 and with no history of late or missed payments may be in one category of borrowers; whereas, borrowers having a credit score between 600 and 799 and a history of occasionally missed or late payments may be in another category. In the multiple categories embodiment, each category of borrower may have unique enforcement policies, but each borrower within one category has identical enforcement policies with another within the same category. For example, all borrowers in the category having a credit score higher than 800 may have a first a first late grace period of ten days, and a second late grace period of an additional five days before disablement. Whereas, in a another example, all borrowers in the category having a credit score between 600 and 799 may have a first late grace period of five days, and a second late grace period of three days before disablement. In another example, borrowers may be categorized based on the date each borrower is paid. More specifically, one category of borrowers may include all borrowers paid on a monthly schedule, whereas other categories of borrowers may be borrowers who receive pay on bi-weekly schedule or a weekly schedule. Although the grace periods and disablement dates may vary between categories, within each category every borrower is subject to the same enforcement policies, and thus the enforcement policies are implemented in a non-discriminatory manner.

Regardless if the enforcement policies are the same for every borrower, or for each of the categories of borrowers, the enforcement policies are established and instituted without any human involvement. In particular, an enforcement policy is programmed as having a set of logical rules and actions that are followed. For example, a borrower may have a monthly payment of $500 due the first of each month. Based on whether the borrower makes a payment on time, whether the payment is partial or in full, whether the borrower makes a late payment, or whether the borrower makes no payment at all, the computer system at the remote operations center executes a pre-determined logic payment schedule program.

Before discussing how the payment schedules are established and initiated, how a borrower makes payments and how payments are recorded with the computer system will be discussed.

In one embodiment, a borrower may make a payment to the lending institution (*i.e*., a bank or dealership) by way of an electronic funds transfer (EFT) or by sending in a paper check. In this embodiment, the lending institution may inform the operations center that a payment has been made as well as the date and amount of the payment. The payment information is subsequently entered into a payment database 132 at a remote computer system. It is possible that for payments made electronically, the remote computer system is able to automatically make note of the payment without human involvement; however, it may also be the case that a human working at the operations center or some other location may manually enter the payment information into the database upon receiving notification of payment.

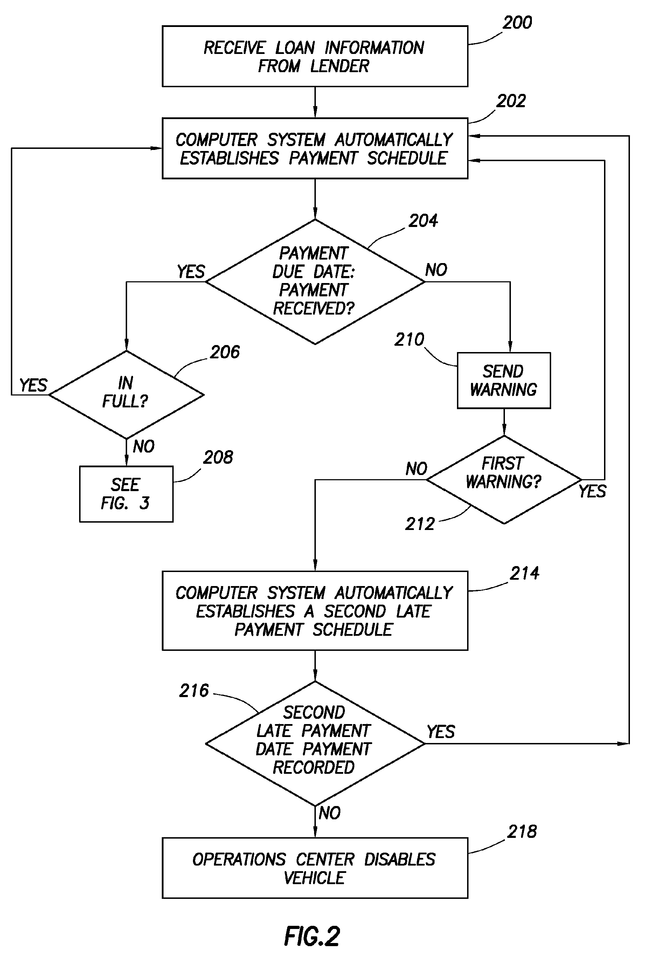

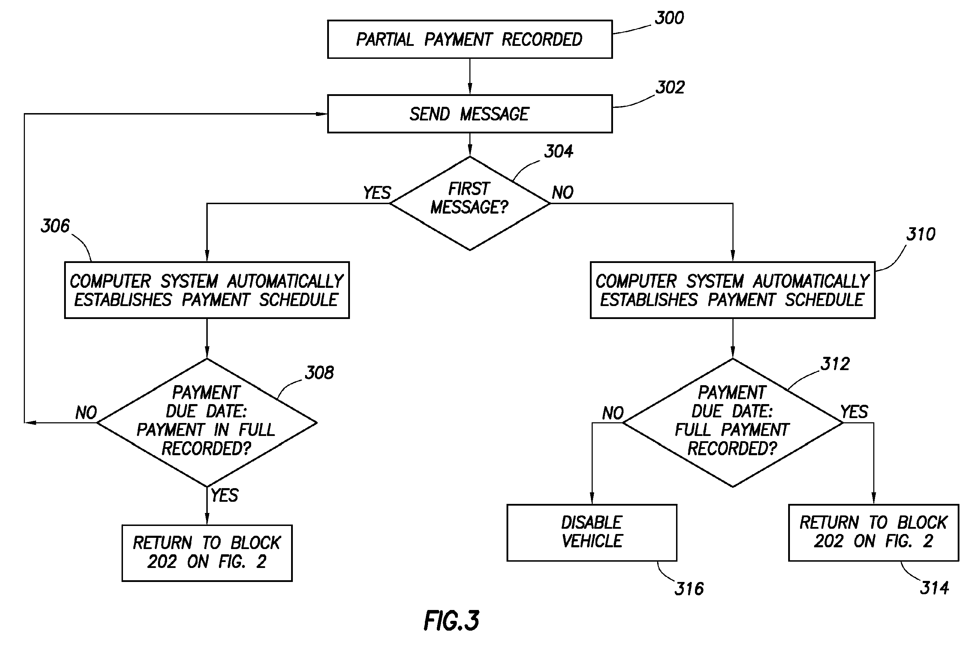

In another embodiment, the borrower may physically make a cash payment. In yet another embodiment, the borrower may pay by credit card or EFT on a webpage communicating with the lending institution. In yet still another embodiment, payment may be made by entering credit card information directly onto a keypad on the onboard device. Regardless of how payment is made, the payment is recorded by the lending institution, and notification of the payment is sent to the operations center. When the operations center receives notification of the payment, the payment information is entered into a payment database. The methods of instituting payment schedules after the remote computer system at the operations center receives loan information are now discussed with respect to Figures 2 and 3.

Figure 2 shows a flow diagram in accordance with at least one embodiment. In particular, the remote operations center receives information from the lending institution regarding a loan (block 200). At this point, the information received from the lending institution may be entered into the system by a human, but other than input, the human entering the information into the system has no decision making abilities regarding enforcement policies.

Once the information has been entered into the computer system, the computer system automatically institutes a payment schedule for the loan (block 202). While the parameters of each loan may vary, the parameters of the loan are set by the lending institution, and the payment schedules are automatically established and instituted by the remote computer system without consideration to the differences between borrowers.

After the loan information has been entered into the computer system, the computer system at the operations center tracks the first payment date. When the payment due date arrives, the computer system determines if a payment has been recorded in the database accessible by the computer system (block 204), and records information related to a payment made on the loan. If a payment has not been recorded in the computer system, the computer system may send a message to the borrower that a payment is due (block 210). The message may be sent: to the borrower by way of the onboard device; to the borrower by way of a message sent to the lending institution, and then from the lending institution to the borrower; or directly to the borrower, such as a text message to a smartphone or an e-mail.

If the message sent to the borrower is the first message sent within the current payment schedule rotation (*i.e*., the first message sent this month), then the computer system in this example automatically institutes a grace period resulting in a first late payment schedule (return to block 202). The first late payment schedule may give the borrower a pre-determined grace period in which to make the payment (*e.g.,* five extra days).

The computer system tracks the first late payment schedule (*i.e*., the first grace period). Once the first grace period has elapsed and the first late payment date arrives, the computer system automatically determines if a payment has been recorded (block 204). If there is no record of a payment made, the computer system in this example sends a second message to the borrower and/or lending institution that the payment is late and is due (block 210). The computer system makes a determination if the message sent was the first message sent within the current payment schedule rotation (block 212). If a message was sent previously (*i.e*., the current message sent is a second warning), the payment schedule is reset for a second late payment schedule (*e.g.,* three extra days) (block 214).

On the date the payment is again due, the computer system determines again if a payment has been made (block 216). If a full payment has been recorded, the computer system automatically resets the payment schedule for another full monthly rotation, while maintaining the pre-determined due dates. For example, if the monthly payment is due the first of each month, and a payment is not recorded until the 15^{th} of the month, the next month payment remains due the first of the next month. The due dates and grace periods are preset, and do not vary based on month-to-month actions by the borrower. In addition, in the example of a late payment, the program executing on the computer system may also contain logic that a late payment includes a late fee, and thus determines if a payment has been made, if it includes the late fee.

Returning to block 216, if the second late payment date is missed (again block 216), the computer system automatically sends a command to the onboard device to disable the vehicle (block 218). Alternatively, the disablement of the vehicle may take place by a lack of action of the remote computer systems (*i.e*., not sending a reset code to the disablement device 116).

In another embodiment, the computer system receives the loan information from the lending institution (block 200). As described previously, the computer system at the operations center automatically institutes a payment schedule for the loan (block 202). On the date payment is due, the computer system determines whether a payment has been recorded in the database (block 204). If a payment is recorded, the computer system determines whether the payment was made in full (block 206). If the payment recorded was the entire amount required, the computer system automatically institutes the payment schedule for another rotation (*i.e*., another month) (block 202). If, however, the computer system recognizes a payment has been made but that the payment made was only a partial payment, the computer system executes a partial payment logic program, as shown in Figure 3.

Figure 3 shows a flow diagram in accordance with at least some embodiments. In particular, the computer system at the remote operations center determines that a partial payment has been made (block 300). The computer system automatically sends a message to the borrower and/or lending institution that a partial payment has been made (block 302). If the message sent regarding partial payment is the first message sent in the current payment schedule rotation (block 304), then the computer system in this example automatically institutes a new partial payment schedule giving the borrower a grace period (block 306). Where the borrower may have only received a five day grace period to make a payment when no payment had yet been made, if a partial payment has been made, the grace period may be longer, such as ten days. Regardless of what period of time the grace period extends the payment due date, the payment schedules have been automatically pre-determined such that every time a payment due date is extended, the same grace period is extended to every borrower in a non-discriminatory manner.

Once the partial payment schedule is instituted for the second grace period, the computer system monitors the database for record of payment. On the date the payment is due, the computer system determines if full payment has been made (block 312). If a full payment has been made, the computer system exits out of the partial payment logic, and institutes the payment schedule for the full month returning to the flow chart of Figure 2, block 202 (block 318). However, if a full payment has not been recorded in the system by the first grace period due date, the computer system again sends a message that a payment is due (block 302). The computer system institutes another payment schedule, giving the borrower an extra few days (*e.g.,* three days) to make the payment (block 310). Again, the number of days by which the payment schedule is extended after the first warning and the second warning is pre-determined, and applied automatically without human intervention.

Once the due date arrives for the second grace period, the computer system again determines whether a full payment has been recorded (block 312). If a full payment has not been made by the third due date, the computer system commands the onboard device to disable the vehicle (block 316). If a full payment has been made by the third due date, the computer system exits out of the partial payment logic, and institutes the payment schedule for the full month, returning to the flow chart of Figure 2, block 202 (block 314).

Once a vehicle has been disabled, the computer system may additionally have programmed logic to enable vehicle operations if a payment is made within a pre-determined time period. As with the discussion above, the command to enable the vehicle is made automatically and without human involvement when specific pre-determined criteria is met (*e.g.,* full payment plus a predetermined enablement fee is made within two days after disablement).

Although the above example includes payment scheduling logic which provides the borrower with one or two grace periods in which to make a payment before disabling the vehicle, any number of grace periods, including none, may be contemplated. Furthermore, although the example grace periods were described as three, five, or ten day extensions, any number of days may be contemplated.

The payment schedules (*i.e*., a default schedule, a partial payment schedule, or subsequent late payment schedules) are all pre-determined and programmed to execute automatically across all borrowers in the same category. After the loan information has been entered into the system, there is no further human interaction in the execution of the system. Due to the fact there is no human interaction, the methods and systems herein describe operate consistently and on a non-discriminatory basis. By contrast, in a situation where a human makes scheduling decisions, a borrower may attempt to alter the payment schedule by bribing the scheduler. In another scenario, in a situation where a human makes scheduling decisions, a human scheduler may eliminate or shorten the grace periods for a borrower for a prejudicial ad/or discriminatory reason. In the system described herein, however, the computer system automatically establishes and initiates the payments schedules without regard to any external criteria or human involvement, thus eliminating any potential discriminatory actions.

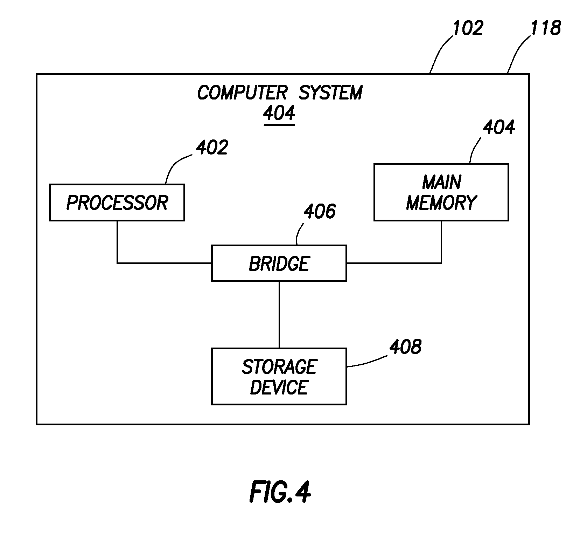

Figure 4 shows a computer system 400, which is illustrative of a computer system upon which the various embodiments may be practiced. The computer system 400 may be illustrative of, for example, computer system 118 coupled to the onboard device 116. In yet another embodiment, computer system 400 may be illustrative of processor 102. In particular, computer system 400 comprises a processor 402, and the processor couples to a main memory 404 by way of a bridge device 406. Moreover, the processor 402 may couple to a long term storage device 408 (*e.g.,* a hard drive, solid state disk, memory stick, optical disc) by way of the bridge device 406. Programs executable by the processor 402 may be stored on the storage device 408, and accessed when needed by the processor 402. The program stored on the storage device 408 may comprise programs to implement the various embodiments of the present specification, such as automatically setting and resetting a payment schedule. In some cases, the programs are copied from the storage device 408 to the main memory 404, and the programs are executed from the main memory 404. Thus, the main memory 404, and storage device 408 shall be considered computer-readable storage mediums.

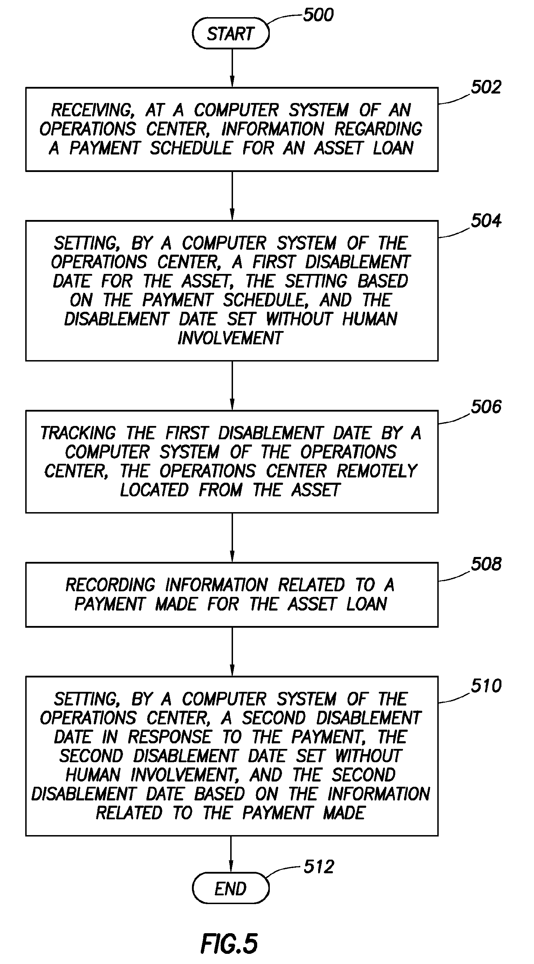

The method of automatically setting a payment schedule will now be discussed in more detail. Figure 5 shows a flow diagram depicting an overall method of detecting tampering and issuing an alert related to the tampering. The method starts (block 500) by receiving, at a computer systems of an operations center, information regarding a payment schedule for an asset loan (block 502); setting, by a computer system of the operations center, a first disablement date for the asset, the setting based on the payment schedule, and the disablement date set without human involvement (block 504); tracking the first disablement date by a computer system of the operations center, the operations center remotely located from the asset (block 506); recording information related to a payment made for the asset loan (block 508); and then setting, by a computer system of the operations center, a second disablement date in response to the payment, the second disablement date set without human involvement, and the second disablement date based on the information related to the payment made (block 510). Thereafter, the method ends (block 512).

From the description provided herein, those skilled in the art are readily able to combine software created as described with appropriate general-purpose or special-purpose computer hardware to create a computer system and/or computer sub-components in accordance with the various embodiments, to create a computer system and/or computer sub-components for carrying out the methods of the various embodiments and/or to create a non-transitory computer-readable medium (*i.e*., not a carrier wave) that stores a software program to implement the method aspects of the various embodiments.

References to "one embodiment," "an embodiment," "some embodiments," "various embodiments," or the like indicate that a particular element or characteristic is included in at least one embodiment of the invention. Although the phrases may appear in various places, the phrases do not necessarily refer to the same embodiment.

The above discussion is meant to be illustrative of the principles and various embodiments of the present invention. Numerous variations and modifications will become apparent to those skilled in the art once the above disclosure is fully appreciated. For example, the various embodiments have been described in terms of remote tamper detection. This context, however, shall not be read as a limitation as to the scope of one or more of the embodiments described - the same techniques may be used for other embodiments. It is intended that the following claims be interpreted to embrace all such variations and modifications.

Aspects of the invention may be understood from the following numbered paragraphs:
1. A method comprising: receiving, at a computer systems of an operations center, information regarding a payment schedule for an asset loan; setting, by a computer system of the operations center, a first disablement date for the asset, the setting based on the payment schedule, and the disablement date set without human involvement; tracking the first disablement date by a computer system of the operations center, the operations center remotely located from the asset; recording information related to a payment made for the asset loan; and then setting, by a computer system of the operations center, a second disablement date in response to the payment, the second disablement date set without human involvement, and the second disablement date based on the information related to the payment made.
2. The method of paragraph 1 wherein recording information further comprises receiving a code related to the payment made, the receiving at the remote operations center.
3. The method of paragraph 2 further comprising wherein setting the second disablement date is responsive to the operations center receiving the code, the setting triggered without human involvement.
4. The method of paragraph 1 further comprising: applying a rule regarding the first disablement date; and then initiating an action based on application of the rule.
5. The method of paragraph 4 wherein applying the rule further comprises recognizing the payment made occurred after the first disablement date.
6. The method of paragraph 4 wherein applying the rule further comprises recognizing the payment made was a partial payment.
7. The method of paragraph 4 wherein initiating the action further comprises at least one selected from the group consisting of: issuing a warning of a first late payment; issuing a warning of a second late payment; disabling the asset.
8. A method comprising: receiving, at a computer systems of an operations center, information regarding a payment schedule for an asset loan; setting, by a computer system of the operations center, a first disablement date for the asset, the setting based on the payment schedule, and the disablement date set without human involvement; tracking the first disablement date by a computer system of the operations center, the operations center remotely located from the asset; and after the first disablement date; disabling the asset by a computer system of the operation center, the disabling occurring without human involvement.
9. The method of paragraph 8 wherein disabling further comprises sending a disablement command to the asset.
10. The method of paragraph 8 wherein, prior to disabling the asset, sending a warning to the asset owner, the sending without human involvement.
11. The method of paragraph 10 wherein disabling further comprises disabling by a computer system of the operations center a predetermined number of days after the warning message is sent, the predetermined number of days implemented without human involvement.
12. The method of paragraph 8 further comprising: recording information related to a payment made for the asset loan; enabling the asset by a computer system of the operations center, the enabling by sending an enablement command; and setting, by a computer system of the operations center, a second disablement date for the asset, the setting based on the payment schedule, and the second disablement date set without human involvement.
13. The method of paragraph 8 further comprising: recording information related to a partial payment made for the asset loan; enabling the asset by a computer system of the operations center, the enabling by sending an enablement command; and setting, by a computer system of the operations center, a second disablement date for the asset, the setting based on the payment schedule, the second disablement date pro rata based on the partial payment, and the second disablement date set without human involvement.
14. A system comprising: a processor; a wireless interface coupled to the processor; a memory coupled to the processor, the memory storing a program that, when executed by the processor, causes the processor to: receive information regarding a payment schedule for an asset loan; set an action date for the asset, the setting based on the payment schedule, and the action date set without human involvement; record information related to a payment made for the asset loan; track a current date in relation to the action date; take an action when the current date meets or exceeds the action date, the action undertaken without human involvement.
15. The system of paragraph 14 wherein when the processor takes the action, the program further causes the processor to at least one selected from the group consisting of: issue a warning of a late payment; set a second action date for the asset; disable the asset; and enable the asset.
16. The system of paragraph 15 wherein, before disabling the asset, the program causes the processor to the program to send a warning to the asset owner, the sending without human involvement.
17. The system of paragraph 14 wherein, after a predetermined number of days have elapsed after the warning of the late payment has been issued, the program further causes the processor to disable the asset, the predetermined number of days implemented without human involvement.
18. The system of paragraph 14 wherein when the processor records information, the program further causes the processor to receive a code related to the payment made.
19. The system of paragraph 17 wherein when the processor takes the action, the program further cases the processor to recognize the payment made occurred after the predetermined number of days has elapsed.
20. The system of paragraph 17 wherein when the processor takes the action, the program further causes the processor to recognize the payment made was a partial payment.

## Claims

1. A method comprising:
receiving, at a computer systems of an operations center, information regarding a payment schedule for an asset loan;
setting, by a computer system of the operations center, a first disablement date for the asset, the setting based on the payment schedule, and the disablement date set without human involvement;
tracking the first disablement date by a computer system of the operations center, the operations center remotely located from the asset; and after the first disablement date;
disabling the asset by a computer system of the operation center, the disabling occurring without human involvement.

2. The method of claim 1, wherein the asset comprises a vehicle.

3. The method of claim 2, wherein the vehicle comprises a disablement system arranged to selectively disable the vehicle.

4. The method of claim 3, wherein disabling the asset by a computer of the operation center comprises transmitting a command from the computer system to the disablement system.

5. The method of any preceding claim wherein disabling further comprises sending a disablement command to the asset.

6. The method of any preceding claim wherein, prior to disabling the asset, sending a warning to the asset owner, the sending without human involvement.

7. The method of any preceding claim wherein disabling further comprises disabling by a computer system of the operations center a predetermined number of days after the warning message is sent, the predetermined number of days implemented without human involvement.

8. The method of any preceding claim further comprising:
recording information related to a payment made for the asset loan;
enabling the asset by a computer system of the operations center, the enabling by sending an enablement command; and
setting, by a computer system of the operations center, a second disablement date for the asset, the setting based on the payment schedule, and the second disablement date set without human involvement.

9. The method of any preceding claim further comprising:
recording information related to a partial payment made for the asset loan;
enabling the asset by a computer system of the operations center, the enabling by sending an enablement command; and
setting, by a computer system of the operations center, a second disablement date for the asset, the setting based on the payment schedule, the second disablement date pro rata based on the partial payment, and the second disablement date set without human involvement.

10. The method of claim 8 or 9, wherein recording information further comprises receiving a code related to the payment made, the receiving at the computer system of the operations center.

11. The method of claim 10, wherein setting the second disablement date is responsive to the operations center receiving the code, the setting triggered without human involvement.

12. A system comprising:
a processor;
a wireless interface coupled to the processor;
a memory coupled to the processor, the memory storing a program that, when executed by the processor, causes the processor to carry out a method according to any preceding claim.

13. The system of claim 12, further comprising:
a computer system of an operations center; and
a vehicle comprising a disablement system arranged to selectively disable the vehicle;
wherein the computer system is arranged to communicate with the disablement system to disable the vehicle.

14. A computer readable medium carrying computer readable code, the computer readable code comprising instructions arranged to cause a computer to carry out a method according to any one of claims 1 to 11.
